# EUROPEAN PATENT APPLICATION

(11) **EP 4 620 288 A1**
(43) Date of publication of application: **24.09.2025**
(21) Application number: 24165297.3
(22) Date of filing: 21.03.2024
(51) Int. Cl.: A01D 43/08, A01D 43/10, A01F 29/10

(54) **CROP PROCESSING SYSTEM**

(71) Applicant: CNH Industrial Belgium N.V., 8210 Zedelgem (BE)
(72) Inventor: Vanden Broucke, Jan-Pieter, 8210 Zedelgem (BE); Van Belleghem, Stijn, 8210 Zedelgem (BE); Wyseur, Jovanni, 8210 Zedelgem (BE)
(74) Representative: CNH Industrial IP Department

(57) **Abstract**

A crop processing system (5) for a forage harvester (1) comprising: a crop processor (30) for processing crop comprising two crop processor rolls (30A, 30B) defining a processor gap (32) therebetween for the crop to pass through, an inlet channel (20) for guiding the crop to the crop processor (30), and a positioning adjustment system configured to adjust a position of the processing gap (32) relative to a centre (22) of the inlet channel (20).

## Description

### TECHNICAL FIELD

The present invention relates to a crop processing system for a forage harvester.

### BACKGROUND

Forage harvesters are often used to harvest a crop such as maize and then process it (i.e., chop it into small pieces) to make silage.

To gather up crop from the field, such harvesters are typically provided with a header which acts both to collect the crop from the field and to transport the crop inside the harvester. The crop material enters the harvester through a set of feed rolls, which feed the cop towards a cutting drum to be chopped into small pieces. The cut crop is then directed through a gap between two counter-rotating crop processor rolls to break the crop up e.g., to break corn kernels apart. The first (or forward) crop processor roll is typically arranged above and forward of the second (or rear) crop processor roll to define the processing gap therebetween. Downstream of the crop processor, there is arranged a blower which accelerates the processed crop out a spout of the harvester.

The processing quality of the crop processor, i.e., the crushing ability of the counter-rotating crop processor rolls, is often referred to as the corn silage processing score (CSPS) and can be measured by methods well-known to the skilled person. The corn silage processing score was initially developed by Dr. Dave Mertens at the USDA Forage Research Center as a tool to define adequacy of kernel processing by forage harvesters. Sometimes the CSPS is also referred to as kernel processing score or KPS. High CSPS is associated with increased nutritional value of the silage. For example, cattle only fully access the nutritional value of corn silage when the corn kernels are broken apart (thereby allowing rumen bacteria to access the starch inside). As such, the more efficiently the corn is processed by the corn processor the more nutritional the corn is for the cattle feeding on it.

Therefore, to improve the quality of the forage harvester output, improvements in the processing quality in general and/or of the CSPS specifically of the crop processor are desired. At the same time, such improvements usually result in increased power demands on the forage harvester.

It is an aim of the present invention to address at least one of these technical problems.

### SUMMARY OF THE INVENTION

According to an aspect of the invention there is provided a crop processing system for a forage harvester comprising:
a crop processor for processing crop comprising two crop processor rolls defining a processor gap therebetween for the crop to pass through,
an inlet channel for guiding the crop to the crop processor, and
a positioning adjustment system configured to adjust a position of the processing gap relative to a centre of the inlet channel.

The inventors have found that by adjusting the position of the processing gap relative to the centre of the inlet channel - or relative to any other fixed point on the inlet channel such as a lower wall of the inlet channel - (i.e., by adjusting the position of the processing gap relative to the crop flow direction in the inlet channel), the crop processing quality of the crop processor (i.e., the corn silage processing score) can be adjusted. For example, in one configuration where the rear roll of the crop processor is more active in processing the crop flow (i.e., when the processing gap and the inlet channel are arranged such that more of the crop is directed towards the rear roll of the crop processor), the inventors have discovered that the crop processing quality is higher, so better, than when the crop is guided more directly into the processing gap. This configuration however requires more power since there is a greater burden on the rear roll. Thus, if the power consumption of the crop processor is too high, the operator may choose to reconfigure the position of the processing gap relative to the inlet channel so that the crop is instead directed directly into the processing gap. In this configuration, the crop processing quality is reduced, so worse, but power consumption is less and hence power is conserved. Alternatively, if the operator detects, while the forage harvester is in use, that the crop processing quality of the crop processor has become too low (e.g., because of a change of environmental factors or the crop processor has become less efficient from use), they can operate the positioning adjustment system to adjust the position of the processing gap relative to the centre of the inlet channel such that more of the crop is directed towards the rear roll of the crop processor. In doing so, the crop processing quality of the crop processor is improved and the crop processor produces higher-quality processed crop despite e.g. the change of environmental factors or the crop processor having become less efficient from use.

In one embodiment, the positioning adjustment system comprises a crop processor actuator. The crop processor actuator may be configured to adjust the position of the processing gap relative to the centre of the inlet channel by displacing the crop processor between a first position and a second position.

Here the crop processor is moved to adjust the relative positioning of the crop processor and the inlet channel - the inlet channel may be fixed in position as the crop processor is moved by the crop processor actuator.

In one embodiment, the crop processor is movably coupled to a rail. Alternatively, the crop processor may be pivotably mounted for pivoting relative to the inlet channel.

The crop processor actuator moves both crop processor rolls together as the crop processor is displaced between the first and second positions, although they may not necessarily be displaced at the same rate. In other words, the distance between the two crop processor rolls may be fixed or variable as the crop processor actuator displaces the crop processor between the first and second positions. The two crop processor rolls may preferably be displaced when the two crop processor rolls are in rotation, e.g., when the forage harvester is in use (i.e., while harvesting), or alternatively when the two crop processor rolls are not in rotation, e.g., when the forage harvester is switched off.

In one embodiment, the positioning adjustment system comprises an inlet channel actuator. The inlet channel actuator may be configured to adjust the position of the processing gap relative to the centre of the inlet channel by displacing at least a portion of the inlet channel between a first location and a second location.

Here the inlet channel is moved to adjust the relative positioning of the crop processor and the inlet channel - the crop processor may be fixed in position as the inlet channel is moved by the inlet channel actuator.

The displaceable (e.g. translatable or pivotable) portion may be either a section of the lower wall or the entire lower wall of the inlet channel. The displaceable section may be an outlet plate of the lower wall of the inlet channel the outlet plate being movably coupled to a remainder of the lower wall. Here a part of the lower wall may be fixed in position while only the portion is moved by the inlet channel actuator.

Alternatively or additionally, the entire inlet channel may be displaceable e.g. translatable or pivotable.

The positioning adjustment system may be configured to adjust the position of the processing gap relative to the centre of the inlet channel by adjusting the position of only one of the crop processor and the inlet channel, i.e., either the entire crop processor (i..e., moving both rolls together) or the inlet channel. Here the inlet channel is fixed in position as the crop processor is moved, or vice versa.

The invention extends to a forage harvester comprising the crop processing system described above.

The invention also extends to a method for controlling the crop processing system or the forage harvester described above, the method comprising:
detecting a crop processing quality of the crop processor,
assessing whether the detectedcrop processing quality is lower than a minimum crop processing quality, and
operating the positioning adjustment system to adjust the position of the processing gap relative to the centre of the inlet channel in dependence on whether the detected crop processing quality is lower than the minimum crop processing quality.

In this way, the operator can improve the crop processing quality of the crop processor when its crop processing quality drops below the tolerable minimum. This drop may occur when the harvester is processing crop under different environmental conditions, or when the crop processor is old or damaged etc., such that it no longer processes crop efficiently. In any case, by operating the positioning adjustment system to adjust the position of the processing gap relative to the centre of the inlet channel when the detected crop processing quality is lower than the crop processing quality minimum, the crop processing quality of the crop processor is improved (again).

Detecting a crop processing quality associated with the crop may comprise a visual inspection, with or without using an app or software application on a smartphone, tablet or laptop, assessment and/or testing of the crop, or a sample taken from the crop, in a collecting trailer when the forage harvester is switched off, or using a sensor and/or camera in a collecting trailer, in a spout or in any componentry downstream of the crop processor to assess the processing quality of the crop in real time.

In one embodiment, between the step of assessing and the step of operating the method comprises an additional step of indicating to an operator of the forage harvester whether the detected crop processing quality is lower than the minimum crop processing quality. This indicating could take the form of a warning displayed on a screen in the cab of the forage harvest - for example, setting out to the operator the choice between increasing the processing quality of the crop processor by adjusting the position of the processing gap relative to the centre of the inlet channel, or else conserving energy for the forage harvester.

The positioning adjustment system is preferably operated to increase a distance between the processing gap and a lower wall of the inlet channel when the crop processing quality of the crop processor is detected to be lower than the minimum crop processing quality. In this way, the processing gap is arranged further away from the centre of the flow of crop and hence more of the crop is directed to one of the crop processing rolls, thereby improving the crop processing quality of the crop processor. In this configuration, there is a greater demand on the crop processor in terms of power consumption.

The invention also extends to a method for controlling the crop processing system or the forage harvester described above, the method comprising:
detecting a level of power consumption of the crop processor,
assessing whether the detected level of power consumption exceeds a power consumption limit, and
operating the positioning adjustment system to adjust the position of the processing gap relative to the centre of the inlet channel in dependence on whether the detected level of power consumption exceeds the power consumption limit.

In this way, the operator can choose the right balance between crop processing quality and fuel consumption, and the operator can conserve fuel when the power consumption limit of the crop processor is breached. When the power consumption limit of the crop processor is exceeded, the operator can operate the positioning adjustment system to adjust the position of the processing gap relative to the centre of the inlet channel, preferably while the forage harvester is in use (i.e., while it is being used to harvest the crop), thereby reducing the action of the crop processor rolls and conserving power.

In one embodiment, between the step of assessing and the step of operating the method comprises an additional step of indicating to an operator of the forage harvester whether the detected level of power consumption exceeds a power consumption limit. This indicating could take the form of a warning displayed on a screen in the cab of the forage harvester - for example, setting out to the operator the choice between lowering the processing quality of the crop processor by adjusting the position of the processing gap relative to the centre of the inlet channel, or else slowing down the forage harvester (to provide further capacity for the crop processor).

The positioning 6djustent system is preferably operated to reduce a distance between the processing gap and a lower wall of the inlet channel when the detected level of power consumption exceeds the power consumption limit. In this way, the operator can arrange the processing gap to closer align with align the flow of crop in the inlet channel when the detected level of power consumption exceeds the power consumption limit, and thereby reduce the amount of power needed for the crop processor to process the crop.

It is anticipated that the adjustment of the relative arrangement of the parts will be controlled by the operator when the forage harvester is in use (i.e., while harvesting). Alternatively, the adjustment of the relative arrangement of the parts can be manually moved by an operator when the forage harvester is switched off. Other operations (including e.g., automatic operation of the positioning adjustment system in dependence on the detected crop processing quality of the crop processor or the detected level of power consumption e.g., while the forage harvester is in use) are also conceived.

### BRIEF DESCRIPTION OF THE DRAWINGS

Embodiments of the invention will now be described by way of example with reference to the accompanying drawings, in which:
Figure 1 shows a side view of a forage harvester that may embody one or more of the inventions described herein.
Figure 2 shows the interior of the forage harvester of Figure 1.
Figure 3 shows a schematic representation of a crop processing system according to the invention comprising an inlet channel and a crop processor, wherein the relative positioning of the crop processor and the inlet channel is such that a processing gap of the crop processor is aligned with a centre of the crop flow through the inlet channel.
Figure 4 shows the crop processing system of Figure 3, wherein the relative positioning of the crop processor and the inlet channel is such that the processing gap is aligned away from the centre of the crop flow through the inlet channel.
Figure 5 shows the crop processing system of Figure 3, wherein the crop processor is displaced to a second position.
Figure 6 shows the crop processing system of Figure 5, wherein the crop processor is returned to its first position.
Figure 7 shows the crop processing system of Figure 3, wherein the entire inlet channel is displaced to a second position.
Figure 8 shows the crop processing system of Figure 7, wherein the entire inlet channel is returned to its first position.
Figure 9 shows the crop processing system of Figure 3, wherein only a section of the inlet channel is displaceable.
Figure 10 shows the crop processing system of Figure 9, wherein the section of the inlet channel is displaced to a second position.
Figure 11 shows the crop processing system of Figure 10, wherein the section of the inlet channel is returned to its first position.

### DETAILED DESCRIPTION

In the following, an agricultural vehicle is described in which the above-described invention may be advantageously used.

The directions up, down, forward, and rearward are herein defined relative to the general horizontal orientation and driving direction of an agricultural harvester when moving over a field and harvesting crop.

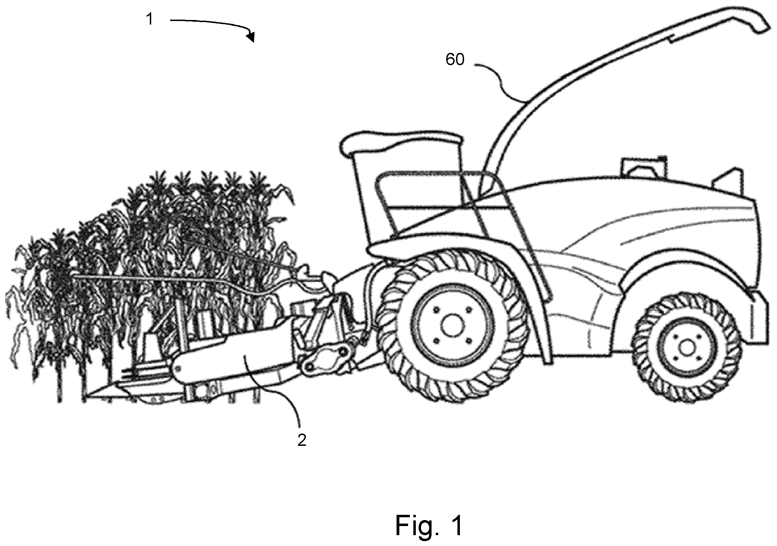

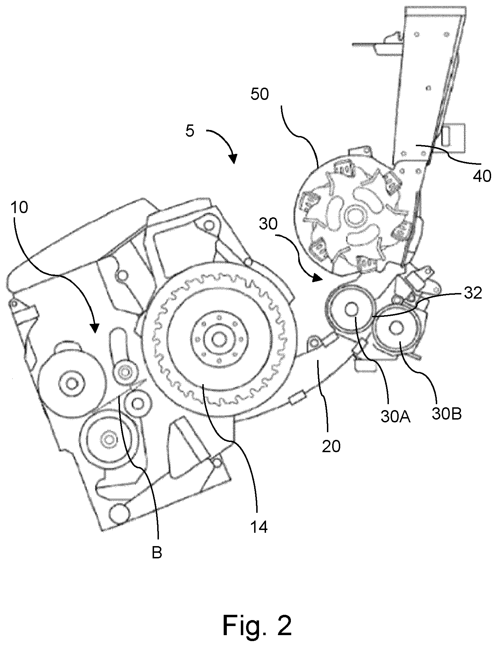

Figures 1 and 2 show an exemplary embodiment of an agricultural vehicle, illustrated in the form of a forage harvester 1 for harvesting maize. As the harvester 1 advances through a field, crops, e.g., maize, are cut and gathered by a header 2 and transported into the harvester 1.

The crop material enters the harvester 1 through a set of feed rolls 10. The feed rolls 10 guide the crop along direction B towards a cutting drum 14. The cutting drum 14 rotates at high speed, about a rotation axis that is transversal to the direction of movement of the incoming crops. Knives are mounted on and distributed along the full circumference of the drum 14 and pass by a stationary shear bar as the drum 14 rotates, thereby chopping the crop into small pieces.

The cut crop is then directed / guided along a first discharge channel 20 (also referred to as the concave or the crop processor inlet channel) into a crop processor 30. The crop processor 30 comprises a pair of counter-rotating crop processor rolls 30A, 30B which process the crop as it passes through a small processing gap 32 defined therebetween. Downstream of the crop processor 30, there is arranged a blower 50 which blows the processed crop along the second discharge channel 40 (also referred to as the crop processor outlet channel) and ejects the crop out of the harvester 1 through spout 60.

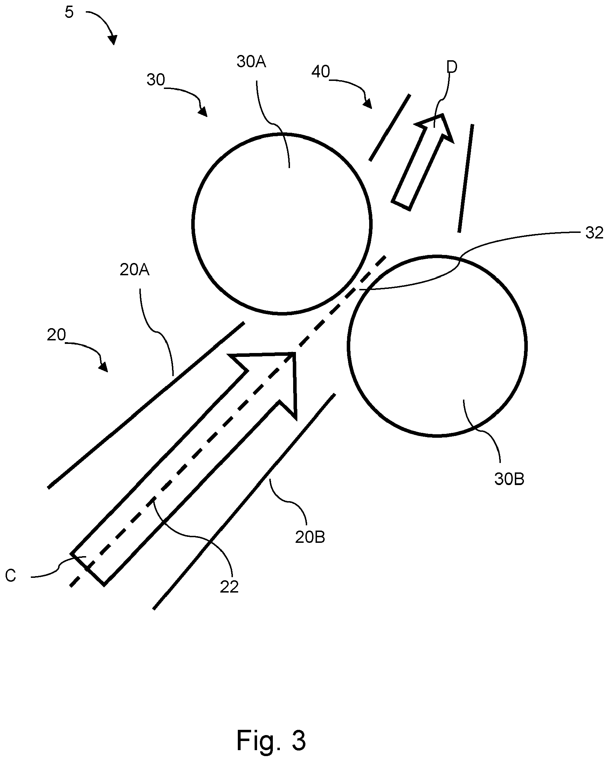

Figures 3 to 11 are schematic diagrams that show - in more detail - the crop processor inlet channel 20, the crop processor 30 and the crop processor outlet channel 40 described above (collectively referred to as the crop processing system 5 of the forage harvester 1).

As can be seen in Figure 3, the first crop processor roll 30A is arranged above and forward of the second crop processor roll 30B. For this reason, the first crop processor roll 30A may be known as the forward or upper processor roll while the second crop processor roll 30B may be known as the rear or lower processor roll.

Each of the crop processor rolls 30A and 30B rotate in different directions - the first crop processor roll 30A rotates counter-clockwise while the second crop processor roll 30B rotates clockwise. By way of this rotational arrangement, crop is directed into the gap 32 between the crop processor rolls 30A, 30B for processing (the gap 32 is exaggerated in Figures 3 to 11 to assist in explaining the invention). As the crop passes through the gap 32, the counter-rotating crop processor rolls 30A, 30B crush the crop and can break apart corn kernels passing therethrough, thereby processing the crop.

The inlet channel 20 guides the crop along flow direction C towards the crop processor 30 for processing. To this end, the inlet channel 20 is composed of a first or upper wall 20A and a second or lower wall 20B. The upper wall 20A and lower wall 20B are shaped such that when they are arranged together they define a cavity therebetween through which crop can flow. The flow of the crop and hence its direction C is determined by the configuration of the inlet channel 20, i.e., by the configuration of the upper wall 20A and lower wall 20B of the inlet channel 20. Depending on the position and/ or shape of the upper wall 20A and/ or lower wall 20B of the inlet channel 20, the direction C of the crop flow through the inlet channel 20 is changed. The position and/ or shape of the lower wall 20B play a more important role in determining the flow of crop through the inlet channel 20 than the position and/ or shape of the upper wall 20A.

To provide an indication of the direction C of the crop flow through the inlet channel 20 and hence the point of impact of the crop on the crop processor 30, one can refer to the centre 22 of the inlet channel 20. The centre 22 relates to an imaginary line within the inlet channel 20 which extends along the inlet channel 20 and divides it in two - i.e., such that the line is equidistant from both the upper wall 20A and lower wall 20B all the way along the channel 20. If the position and/ or shape of the upper wall 20A and/ or lower wall 20B of the inlet channel 20 are changed, the direction C of the crop flow, and hence the point of impact of the crop on the crop processor 30, will also be changed, and these changes will correspond in kind with the changed centre 22 of the inlet channel 20.

However, it is important to note that the centre of the crop flow within the inlet channel 20 is in reality lower than the centre 22 of the inlet channel 20 (i.e., the true direction C of the crop flow through the inlet channel 20 is lower than shown in the Figures 3 to 11). Indeed, most crop particles travel along the lower wall 20B in a dense crop layer. Instead, in the upper part of the channel 20, more dispersed particles may be present, but it is not the majority of the crop flow. This means the centre of the crop flow does not align with the centre of the inlet channel 20. Nevertheless, the centre 22 of the inlet channel 20 will provide a rough indication of the direction C of the crop through the inlet channel 20.

After passing through the crop processor 30, the processed crop flows in flow direction D out of outlet channel 40 and towards the spout 60, under the action of the blower 50 (not shown in Figures 3 to 11).

In Figure 3, the relative positioning of the crop processor 30 and the inlet channel 20 is such that the crop flow direction C aligns with gap 32 of the crop processor 30, and hence the inlet channel is guiding the crop directly into the gap 32 between the two crop processor rolls 30A, 30B.

The inventors have discovered that by changing the degree of alignment between the centre 22 of the inlet channel 20 and the gap 32 of the crop processor 30, the crop processing quality of the crop processor 30 (i.e. the crushing ability of the crop processor 30) can be changed. Only a change of 10 to 30 mm between the centre 22 of the inlet channel 20 and the gap 32 of the crop processor 30 has been shown to be needed to provide a significant change in KPS of the crop processor 30.

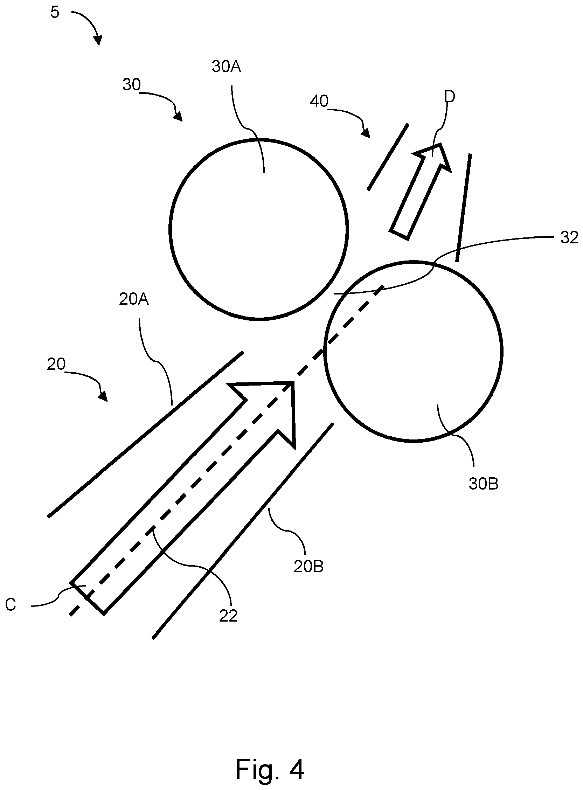

For example, in Figure 4, the relative positioning of the crop processor 30 and the inlet channel 20 are changed such that the crop flow direction C does not align with the processing gap 32 and instead aligns with the second crop processor roll 30B. As such, the inlet channel 20 does not guide the crop towards the gap 32 between the two crop processor rolls 30A, 30B, but towards the second crop processor roll 30B. Much more of the crop thus engages with the second crop processor roll 30B/ the second crop processor roll 30B is more active in processing the crop, and the crop is directed into the gap 32 by the second crop processor roll 30B.

In this configuration - where the distance between the processing gap 32 and a lower wall 20B of the inlet channel 20 is increased compared to Figure 3 - the inventors have discovered that the crop processing quality of the crop processor 30 is much improved compared to the arrangement of Figure 3, but that due to the increased exertion of the second crop processor roll 30B the crop processing system 5 of Figure 4 has a higher power consumption.

Of course, the skilled person will appreciate that the relative positioning between the crop processor 30 and inlet channel 20 does not need to be defined with respect to the centre 22 of the inlet channel 20, and can instead be defined with respect to any other fixed point on the inlet channel 20, such as a lower wall 20B of the inlet channel 20.

On the basis of the above discoveries, the inventors have developed a positioning adjustment system (not shown) which can be used to adjust the relative positioning of the crop processor 30 and the centre 22 of the inlet channel 20 and thus to adjust both the crop processing quality and the power consumption of the crop processor 30. In this way, the operator can, for example, (i) improve the crop processing quality of the crop processor 30 when it is detected to be too low or (ii) decrease the crop processing quality of the crop processor 30 when the crop processor 30 is consuming too much power. Methods of achieving (i) and (ii) will now be described to further illustrate the benefits of the invention.

The first method of controlling the above-described positioning adjustment system may include the following.

The first step may include detecting a crop processing quality of the crop processor 30. The second step may include assessing whether the detected crop proessing quality is lower than a minimum crop processing quality (i.e., a pre-set threshold). The third step may include operating the positioning adjustment system to adjust the position of the processing gap 32 relative to the centre 22 of the inlet channel 20 in dependence on whether the detected crop processing quality is lower than the pre-set mininmu crop processing quality. Preferably, the positioning adjustment system is operated to increase the distance between the processing gap 32 and the lower wall 20B of the inlet channel 20 when the crop processing quality of the crop processor 30 is detected to be lower than the minimum crop processing quality. In this way, the processing gap 32 is arranged further away from the centre of the flow of crop C (i.e. as in Figure 4) and hence more of the crop is directed to the second crop processor roll 30B, thereby improving the crop processing quality of the crop processor 30.

Hence, in this way, the operator can improve the crop processing quality of the crop processor 30 when its processing quality drops below the tolerable minimum. This drop may occur when the harvester 1 is processing crop under different environmental conditions, or when the crop processor 30 is old or damaged etc, such that it no longer processes crop efficiently.

To detect a crop processing quality of the crop processor 30, the operator may perform a visual inspection/ assessment of the crop in a collecting trailer (not shown) when the forage harvester 1 is switched off. Additionally or alternatively, the operator may use a sensor and/or camera (not shown) in a collecting trailer, in the spout 60 or in any componentry downstream of the crop processor 30 to assess the crop processing quality in real time.

In one embodiment, between the second and third steps the method comprises an additional step of indicating to an operator of the forage harvester 1 whether the detected crop processing quality is lower than the minimum crop processing quality. This indicating could take the form of a warning displayed on the screen of the cab (not shown) - for example, setting out to the operator the choice between increasing the processing quality of the crop processor 30 by adjusting the position of the processing gap 32 relative to the centre 33 of the inlet channel 20, or else conserving energy for the forage harvester 1.

The second method of controlling the above-described positioning adjustment system may include the following.

The first step may include detecting a level of power consumption of the crop processor 30, the second step may include assessing whether the detected level of power consumption exceeds a power consumption limit (i.e., a pre-set threshold) of the crop processor 30, and the third step may include operating the positioning adjustment system to adjust the position of the processing gap 32 relative to the centre 22 of the inlet channel 20 in dependence on whether the detected level of power consumption exceeds the power consumption limit. In particular, the operator can operate the positioning adjustment system to reduce the distance between the processing gap 32 and a lower wall 20B of the inlet channel 20 when the detected level of power consumption exceeds the power consumption limit. In this way, the operator can arrange the processing gap 32 to closer align with the flow of crop C in the inlet channel 20 (as in Figure 3) when the detected level of power consumption exceeds the power consumption limit, and thereby reduce the amount of power needed for the crop processor 30 to process.

In this way, the operator can choose the right balance between crop processing quality and fuel consumption, and the operator can conserve fuel when the power consumption limit of the crop processor is breached.

To detect the current level of power consumption of the crop processor 30, suitable sensors may be incorporated into the crop processing system 5. Such sensors may be used alongside indicators to indicate power consumption of the crop processor 30 to the operator of the forage harvester 1, e.g. on the dashboard inside the cab. Based on these indications, the operator can operate the positioning adjustment system accordingly. In particular, between the second and third steps, the method may comprise an additional step of indicating to an operator of the forage harvester 1 whether the detected level of power consumption exceeds a power consumption limit. This indicating could take the form of a warning displayed on the screen in the cab (not shown) - for example, setting out to the operator the choice between lowering the processing quality of the crop processor 30 by adjusting the position of the processing gap 32 relative to the centre 22 of the inlet channel 20, or else slowing down the forage harvester 1 (to provide further capacity for the crop processor 30).

It is anticipated that the adjustment of the relative arrangement of the parts of the crop processing system 5 will be controlled by an operator when the forage harvester 1 is in use (i.e., while harvesting). Alternatively, the adjustment of the relative arrangement of the parts will be performed by an operator when the forage harvester is switched off. Other operations (including e.g., automatic operation of the positioning adjustment system in dependence on the detected level of crop processing quality or power consumption e.g., while the forage harvester is in use) are also conceived.

Now different embodiments of the positioning adjustment system for adjusting the relative positioning of the crop processor 30 and the inlet channel 20 will be described.

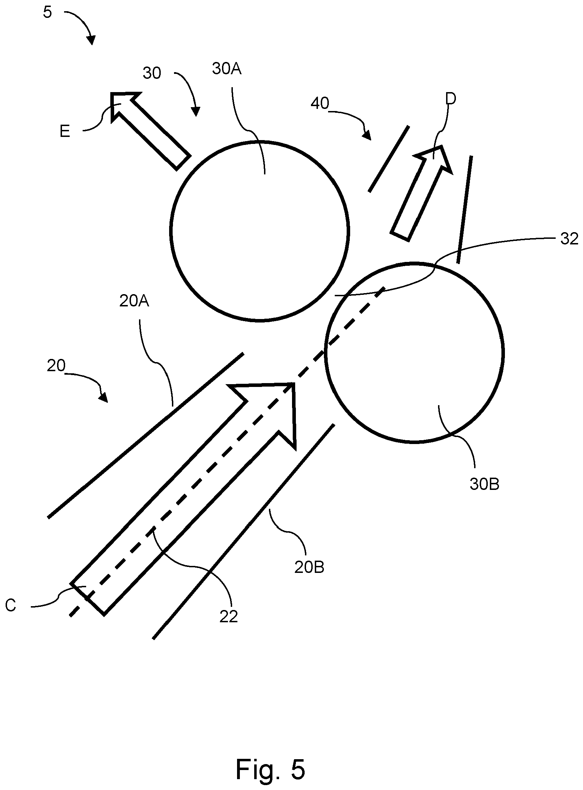

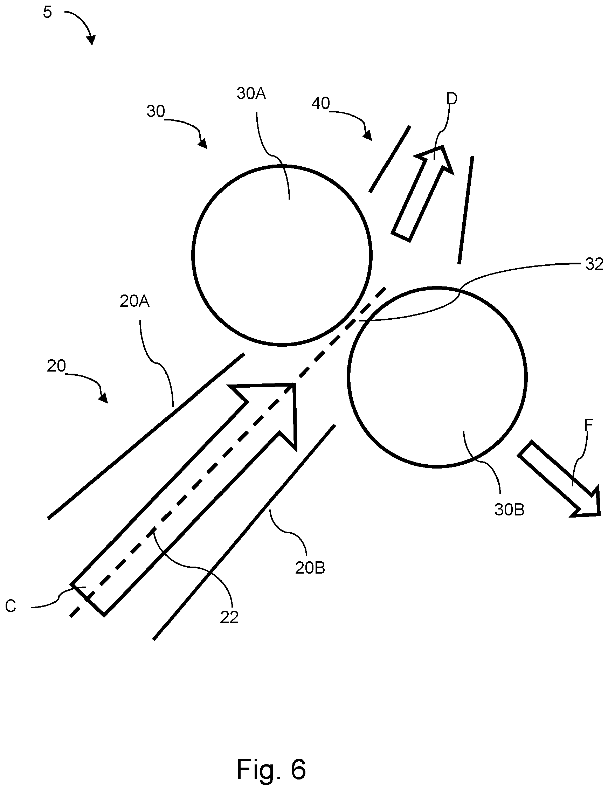

Figures 5 and 6 illustrate a first embodiment of the positioning adjustment system which takes the form of a crop processor actuator. To adjust the relative positioning of the processing gap 32 and the centre 22 of the inlet channel 20, the crop processor actuator moves the crop processor 30 from a first position (i.e. as shown in Figure 3) along direction E to a second position away from the first position (Figure 5) and back towards the first position along direction F (Figure 6). In other words, the crop processor actuator displaces a displaceable crop processor 30 across the harvester 1 in this embodiment, while the inlet channel 20 remains fixed in position in the harvester 1.

In Figures 3, 5 and 6 the first position of the crop processor 30 is more rearward and downward such that the distance between the processing gap 32 and the lower wall 20B is less, while the second position of the crop processor 30 is more forward and upward such that the distance between the processing gap 32 and the lower wall 20B is more. As a result, in the first position (Figures 3 and 6) the crop flow C is aligned (or is more aligned) with the gap 32 of the crop processor 30, while in the second position (Figure 5) the crop flow C does not align (or is less aligned) with the processing gap 32 and instead aligns (or is more aligned) with the second crop processor roll 30B.

To move between the first and second positions, the crop processor actuator moves both crop processor rolls 30A, 30B together. To this end, the crop processor system 5 may be provided with a rail (not shown) to which the crop processor rolls 30A, 30B are movably coupled. As the crop processor actuator acts to move the crop processor 30, both of the crop processor rolls 30A, 30B move together along the rail between the first and second positions. Alternatively, the two crop processor rolls 30A, 30B may be pivotably mounted to a pivot axis of the crop processor system 5 such that the two crop processor rolls 30A, 30B are pivotable relative to the inlet channel 20. As the crop processor actuator acts to move the crop processor 30, both of the crop processor rolls 30A, 30B are pivoted together between the first and second positions.

Although the crop processor actuator is configured to move both crop processor rolls 30A, 30B together as the crop processor 30 is displaced between the first and second positions, the crop processor rolls 30A, 30B may not necessarily be displaced at the same rate. In other words, the distance between the two crop processor rolls 30A, 30B (or the size of the processing gap 32) may be fixed or variable as the crop processor actuator displaces the crop processor 30 between the first and second positions.

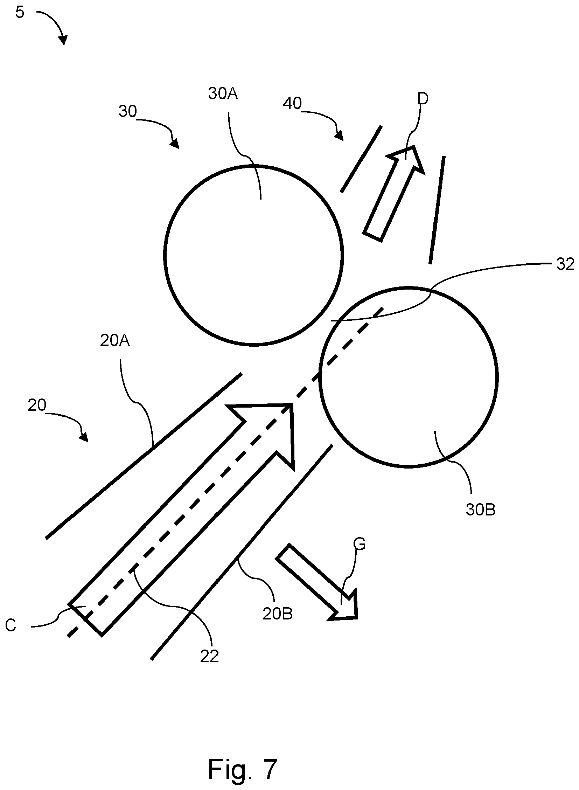

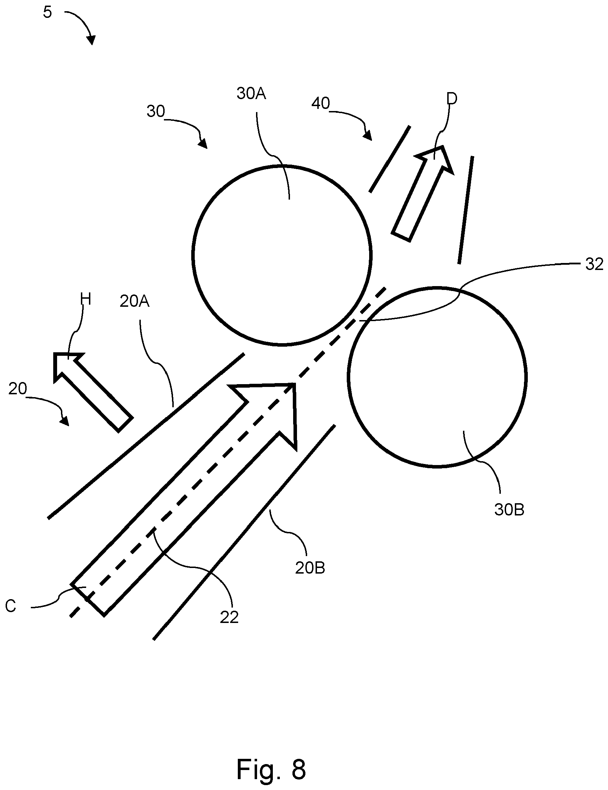

Figures 7 and 8 illustrate a second embodiment of the positioning adjustment system which takes the form of an inlet channel actuator. To adjust the relative positioning of the processing gap 32 and the centre 22 of the inlet channel 20, inlet channel actuator moves or translates the entire inlet channel 20 from a first position or location (i.e. as shown in Figure 3) along direction G to a second position or location away from the first position (Figure 7) and back towards the first position along direction H (Figure 8). In other words, the inlet channel actuator displaces a displaceable inlet channel 20 across the harvester 1 in this embodiment, while the crop processor 30 remains fixed in position in the harvester 1. The skilled person appreciates that since the inlet of the inlet channel 20 may need to remain in position (to connect with other components upstream), the inlet channel 20 may instead be understood to pivot between the first and second positions about said connection point.

In Figures 3, 7 and 8 the first position of the inlet channel 20 is more forward and upward such that the distance between the processing gap 32 and a lower wall 20B is less, while the second position of the inlet channel 20 is more rearward and downward such that the distance between the processing gap 32 and a lower wall 20B is more. As a result, in the first position (Figures 3 and 8) the crop flow C is aligned (or is more aligned) with the gap 32 of the crop processor 30, while in the second position (Figure 7) the crop flow C does not align (or is less aligned) with the processing gap 32 and instead aligns (or is more aligned) with the second crop processor roll 30B. To move between the first and second positions, the inlet channel actuator moves both walls 20A, 20B of the inlet channel 20 together.

Alternatively, only a portion of the inlet channel 20 may be moved by the inlet channel actuator to adjust the relative positioning of the processing gap 32 and the centre 22 of the inlet channel 20/ the relative positioning of the processing gap 32 and the lower wall 20B of the inlet channel 20.

In one embodiment, only one of the walls 20A, 20B of inlet channel 20 is moved through the harvester 1 by the inlet channel actuator to adjust the relative positioning of the processing gap 32 and the centre 22 of the inlet channel 20 - i.e., while the other wall remains fixed in position in the harvester 1.

For example, the inlet channel actuator may only translate the lower wall 20B of the inlet channel 20 to adjust the relative positioning of the processing gap 32 and the centre 22 of the inlet channel 20 - in the first position, the lower wall 20B of the inlet channel 20 may be more forward and upward, i.e. the entire lower wall 20B is closer to the upper wall 20A, such that the distance between the processing gap 32 and the lower wall 20B is less, while in the second position of the inlet channel 20 may be more rearward and downward, i.e., the entire lower wall 20B is further away from the upper wall 20A, such that the distance between the processing gap 32 and the lower wall 20B is more.

Alternatively, the entire lower wall 20B may be pivoted away from and back towards the upper wall 20A to control the relative arrangement of the centre 22 of the inlet channel 20 and the gap 32 of the crop processor 30.

In another embodiment, only a section of one the walls of inlet channel 20 is moved through the harvester 1 by the inlet channel actuator - i.e., while the rest of the inlet channel 20 remains fixed in position in the harvester 1.

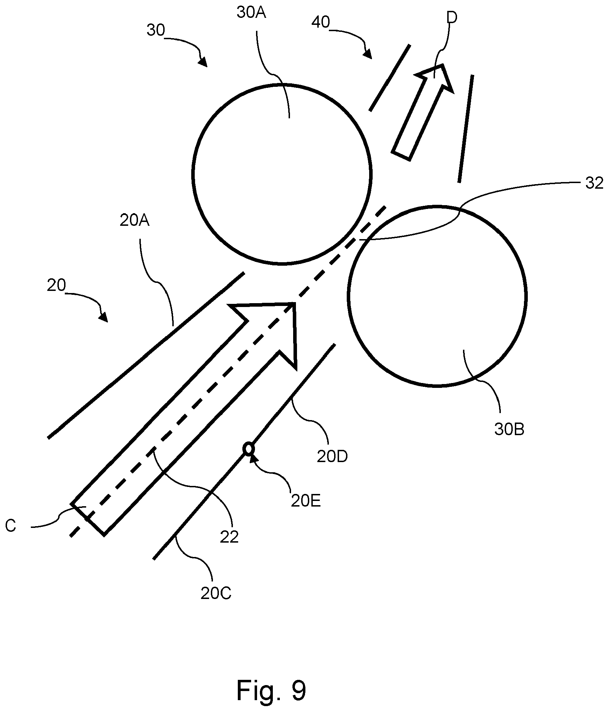

For example, Figures 9, 10 and 11 show an embodiment of the crop processing system 5 where the lower wall 20B of the inlet channel 20 includes a first section 20C closer to the cutting drum 14 and a second section 20D closer to the crop processor 30, wherein the second section 20D is movably coupled to the first section 20C at coupling 20E. Here, the first section 20C of the lower wall 20B (as well as the entire upper wall 20A) is fixed in position, while the second section 20D is movable about coupling 20E, i.e., the second section 20D is pivotable about coupling 20E. This second section 20D may, for example, be the outlet plate of the lower wall 20B.

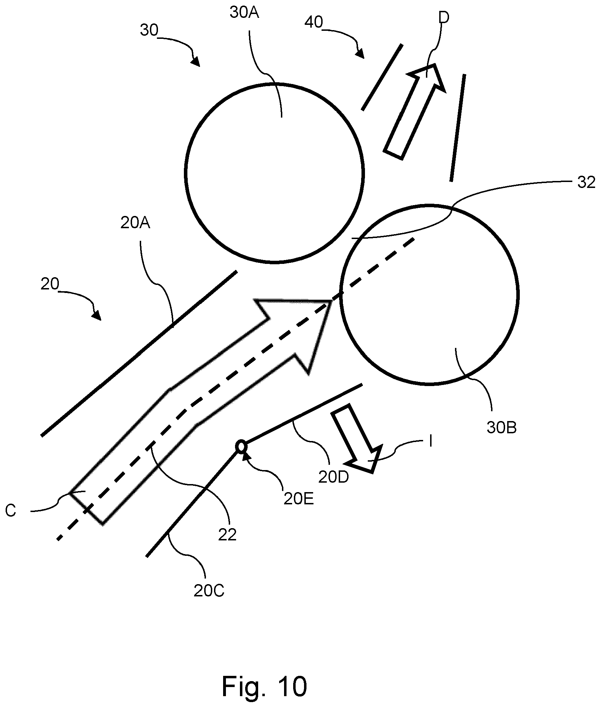

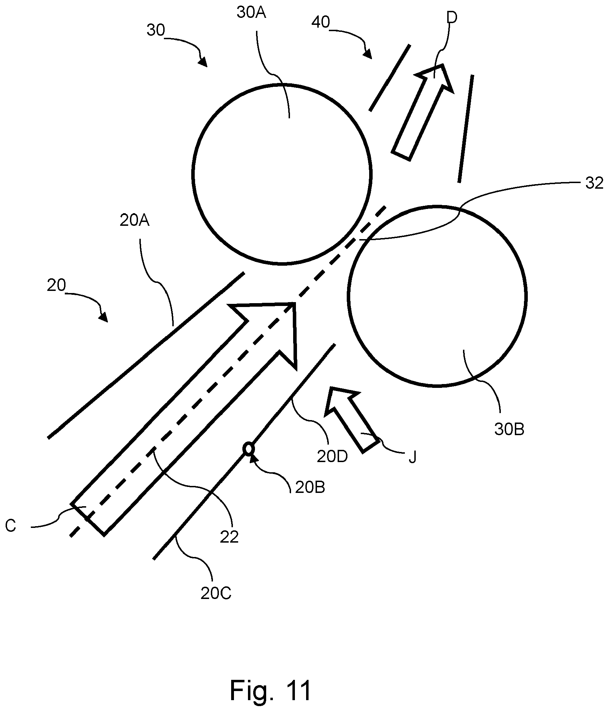

In this embodiment, to adjust the relative positioning of the processing gap 32 and the centre 22 of the inlet channel 20, the inlet channel actuator can move the second section 20D from a first position (i.e., as shown in Figure 9) along direction I to a second position away from the first position (Figure 10) and then back towards the first position along direction J (Figure 11).

Alternatively, and more preferably, the second section 20D is pivoted towards the upper wall 20A (i.e., into the cavity/ the crop flow) in the first position and the inlet channel actuator can move the second section 20D from this first position along direction I to a second position away (where the second section 20D is arranged e.g. parallel to the first second 20C) and then back towards the first position along direction J.

In any case the first position of the second section 20D is more forward and upward, i.e., closer to the upper wall 20A such that the distance between the processing gap 32 and the lower wall 20B is less, while the second position of the second section 20D is more rearward and downward, i.e., further from the upper wall 20B, such that the distance between the processing gap 32 and the lower wall 20B is more.

As a result, in the first position (Figures 9 and 11) the crop flow C is aligned (or is more aligned) with the gap 32 of the crop processor 30, while in the second position (Figure 10) the crop flow C does not align (or is less aligned) with the processing gap 32 and instead aligns with (or is more aligned with) the second crop processor roll 30B.

Due to the change in the shape of the inlet channel 20 part way along, i.e., the section of the channel where the cavity becomes larger or smaller, the crop flow changes direction C as it passes through the inlet channel 20. When the crop flow changes direction C as it passes through the inlet channel 20, the centre 22 of the inlet channel 20 is taken to be the centre 22 of the inlet channel 20 at the extremity of the inlet channel 20 adjacent to the crop processor 30.

Any suitable device such as the rail or the pivot described above in relation to the crop processor 30 could be used to move the inlet channel 20, or a portion thereof, between the first and second positions.

Variations on the harvester described above will also be apparent to the skilled person.

For example, in one embodiment, the positioning adjustment system comprises both the crop processor actuator and the inlet channel actuator and to adjust the relative positioning of the processing gap 32 and the centre 22 of the inlet channel 20, the positioning adjustment system moves both the crop processor 30 and the inlet channel 20 in the ways described above.

### Reference numerals

- 1: Forage harvester
- 2: Header
- 5: Crop processing system
- 10: Feed rolls
- 14: Cutting drum
- 20: Inlet channel
- 20A: Upper wall (of inlet channel)
- 20B: Lower wall (of inlet channel)
- 20C: First section (of lower wall)
- 20D: Second section (of lower wall)
- 20E: Coupling
- 22: Centre (of inlet channel)
- 30: Crop processor
- 30A: First crop processor roll
- 30B: Second crop processor roll
- 32: Processing gap
- 40: Outlet channel
- 50: Blower
- 60: Spout
- A: Direction of corn flow into header
- B: Direction of corn flow out of feed rolls
- C: Direction of corn flow through inlet channel
- D: Direction of corn flow through outlet channel
- E: Direction crop processor moves in to reach second position
- F: Direction crop processor moves in to return to first position
- G: Direction entire inlet channel moves in to reach second position
- H: Direction entire inlet channel moves in to return to first position
- I: Direction inlet channel portion moves in to reach second position
- J: Direction inlet channel portion moves to return to first position

## Claims

1. A crop processing system (5) for a forage harvester (1) comprising:
a crop processor (30) for processing crop comprising two crop processor rolls (30A, 30B) defining a processor gap (32) therebetween for the crop to pass through,
an inlet channel (20) for guiding the crop to the crop processor (30), and
a positioning adjustment system configured to adjust a position of the processing gap (32) relative to a centre (22) of the inlet channel (20).

2. The crop processing system (5) of Claim 1, wherein the positioning adjustment system comprises a crop processor actuator, and wherein the crop processor actuator is configured to adjust the position of the processing gap (32) relative to the centre (22) of the inlet channel (20) by displacing the crop processor (30) between a first position and a second position.

3. The crop processing system (5) of Claim 1 or Claim 2, wherein the crop processor (30) is movably coupled to a rail.

4. The crop processing system (5) of Claim 1 or Claim 2, wherein the crop processor (30) is pivotably mounted for pivoting relative to the inlet channel (20).

5. The crop processing system (5) of any preceding claim, wherein the positioning adjustment system comprises an inlet channel actuator, and wherein the inlet channel actuator is configured to adjust the position of the processing gap (32) relative to the centre (22) of the inlet channel (20) by displacing at least a portion of the inlet channel (20) between a first location and a second location.

6. The crop processing system (5) of Claim 5, wherein the portion is either a section (20D) of the lower wall (20B) or the entire lower wall (20B) of the inlet channel (20).

7. The crop processing system (5) of any of Claims 1 to 5, wherein the entire inlet channel (20) is displaceable.

8. A forage harvester (1) comprising the crop processing system (5) of any preceding claim.

9. A method for controlling the crop processing system (1) of any of Claims 1 to 7 or the forage harvester of Claim 8, the method comprising:
detecting a crop processing quality of the crop processor (30),
assessing whether the detected crop processing quality is lower than a minimum crop processing quality, and
operating the positioning adjustment system to adjust the position of the processing gap (32) relative to the centre (22) of the inlet channel (20) in dependence on whether the detected crop processing quality is lower than the minimum crop processing quality.

10. The method of Claim 9, wherein the positioning adjustment system is operated to increase a distance between the processing gap (32) and a lower wall (20B) of the inlet channel (20) when the detected crop processing quality is lower than the minimum crop processing quality.

11. A method according to claim 9 and/or 10, wherein the crop processing quality is measured by determining the corn silage processing score.

12. A method according to claim 11, wherein the corn silage processing score is determined by testing a sample taken from crop that was processed by the crop processor (30).

13. A method according to claim 11, wherein the corn silage processing score is determined by using a sensor and/or camera downstream of the crop processor (30).

14. A method for controlling the crop processing system (1) of any of Claims 1 to 7 or the forage harvester of Claim 8, the method comprising:
detecting a level of power consumption of the crop processor (30),
assessing whether the detected level of power consumption exceeds a power consumption limit, and
operating the positioning adjustment system to adjust the position of the processing gap (32) relative to the centre (22) of the inlet channel (20) in dependence on whether the detected level of power consumption exceeds the power consumption limit.

15. The method of Claim 11, wherein the positioning adjustment system is operated to reduce a distance between the processing gap (32) and a lower wall (20B) of the inlet channel (20) when the detected level of power consumption exceeds the power consumption limit.
